# EUROPÄISCHE PATENTANMELDUNG

(11) **EP 1 459 616 A2**
(43) Veröffentlichungstag der Anmeldung: **22.09.2004**
(21) Anmeldenummer: 04003602.2
(22) Anmeldetag: 18.02.2004
(51) Int. Cl.: A01D 34/73

(54) **Messerbalken für einen Rasenmäher**

(30) Priorität: 21.02.2003 DE 10307666; 07.02.2004 DE 10406163
(71) Anmelder: Kress, Werner, D-89077 Ulm (DE)
(72) Erfinder: Kress, Werner, D-89077 Ulm (DE)
(74) Vertreter: Dr. Weitzel & Partner

(57) **Zusammenfassung**

Die Erfindung betrifft einen drehbar gelagerten Messerbalken für einen Rasenmäher
- mit wenigstens einem Messer, das eine Schneide aufweist;
- die Schneide des Messerbalkens ist derart angeordnet, dass sie bei Betrieb des Rasenmähers einen ziehenden Schnitt ausführt;
- auf dem Messerbalken ist ein Lüfterflügel angeordnet, der beim Betrieb des Rasenmähers aus der Ebene des Messerbalkens nach oben ragt.

Gemäß der Erfindung wird Folgendes vorgesehen:
- der einzelne Lüfterflügel ist in einer Seitenansicht auf eine Längsseite des Messerbalkens gesehen wenigstens im Bereich seines freien Endes gekrümmt.

## Beschreibung

Das wesentliche Element des Rasenmähers ist ein Messerbalken. Dieser ist in einem Gehäuse drehbar gelagert. Er kann aus einem Stahlblechstreifen bestehen. Die Drehachse befindet sich in der Mitte zwischen den beiden Enden des Messerbalkens, so dass im allgemeinen zwei gleich lange Arme gebildet werden. Es ist aber auch denkbar, einen einarmigen Messerbalken zu verwenden.

An den Enden des Messerbalkens befindet sich das Messer. Dieses kann dem Messerbalken angeschlossen sein. Es kann aber auch ein besonderer Messerkörper am Messerbalken befestigt sein, beispielsweise durch Anschrauben, Ankleben oder Verschweißen. Die Schneide des Messers verläuft dabei parallel zur Längsachse des Messerbalkens.

Die übrigen Elemente eines Rasenmähers sind bekannt. Das Gehäuse ist mit einem Führungsholm fest verbunden. Der Führungsholm kann verschwenkbar sein. Das Gehäuse trägt einen Motor - Verbrennungsmotor oder Elektromotor -, der den Messerbalken antreibt.

Ein ganz wesentliches Problem eines jeden Rasenmähers ist das Geräusch, das er erzeugt. Dabei gibt es zahlreiche Geräuschquellen. Hierzu gehört vor allem der Motor, insbesondere dann, wenn es sich um einen Verbrennungsmotor handelt.

Eine weitere Geräuschquelle sind mechanische Bauteile, die Vibrations- und Klappergeräusche erzeugen können.

Eine dritte Geräuschquelle sind Luftströme, insbesondere dann, wenn diese um scharfe Kanten umgelenkt werden. Dies ist im Bereich des umlaufenden Messerbalkens der Fall. Besonders problematisch können dabei Lüfterflügel sein, die dem Messerbalken zugeordnet sind. Diese haben die Aufgabe, das vom Messer abgeschlagene oder abgeschnittene Gut in eine bestimmte Richtung oder zu einem bestimmten Ort zu befördern, beispielsweise zum Einlass eines Grasfangbehälters hin. Solche Lüfterflügel können nach Art von Pumpenschaufeln gestaltet und angeordnet sein.

Der Erfindung liegt die Aufgabe zugrunde, einen Messerbalken der beschriebenen Art derart zu gestalten, dass die im Bereich des Messerbalkens erzeugten Geräusche minimiert werden. Gleichzeitig soll die Schnittleistung verbessert werden, insbesondere was die Schnittqualität und die Standzeit des Messers anbelangt.

Diese Aufgabe wird durch die Merkmale von Anspruch 1 gelöst.

Der Erfinder hat demgemäss erkannt, dass eine gewisse Krümmung des freien Endes des Lüfterflügels zu einer erheblichen Reduzierung des Geräuschpegels während des Betriebes des Rasenmähers führt.

Dabei kann die Krümmung entweder konkav oder konvex sein, d. h. der Krümmungsmittelpunkt kann - bei im Betrieb befindlichen Rasenmäher - oberhalb oder unterhalb des Lüfterflügels liegen. Die beste Wirkung hat sich dann gezeigt, wenn der Krümmungsmittelpunkt der Krümmung des Lüfterflügels unten liegt.

Die Erfindung ist anhand der Zeichnung näher erläutert. Darin ist im einzelnen folgendes dargestellt:
- Figur 1: zeigt einen Messerbalken im Aufriss, und zwar mit Blick auf eine Längsseite des Messerbalkens.
- Figur 2: zeigt den Messerbalken gemäß Figur 1 in Draufsicht.
- Figur 3: zeigt den Gegenstand von Figur 2 mit Blick auf dessen eines Ende.
- Figur 4: zeigt den Messerbalken gemäß Figur 1 in einer perspektivischen Ansicht schräg von oben.
- Figur 5: ist ein Schnitt A - A durch den in Figur 2 gezeigten Lüfterflügel in vergrößertem Maßstab.
- Fig. 6, 7 und 8: sind weitere Schnittansichten D - D, C - C und B - B, parallel zueinander gelegt in Figur 2.
- Figur 9: zeigt einen drehbar gelagerten Messerbalken in einer perspektivischen Draufsicht.
- Figur 10: zeigt den Messerbalken gemäß Figur 9 in Draufsicht und in vergrößertem Maßstab.
- Figur 11: zeigt eine Schnittansicht A-A in Figur 10.
- Figur 12: zeigt den Messerbalken gemäß Figur 9 im Aufriss.
- Figur 13: zeigt den Messerbalken gemäß Figur 9 in einer Ansicht von unten.
- Fig. 14, 15 und 16: zeigen Messerbalken unterschiedlicher Kontur, alle in Draufsicht.

Der dargestellte Messerbalken 1 ist aus einem Stahlblech besonderer Zähigkeit hergestellt. Seine Stärke beträgt nur wenige Millimeter, seine Breite einige Zentimeter. Seine Länge kann in der Größenordnung von 30 bis 60 Zentimeter liegen. Bei allen diesen Angaben sind Abweichungen nach oben und nach unten möglich.

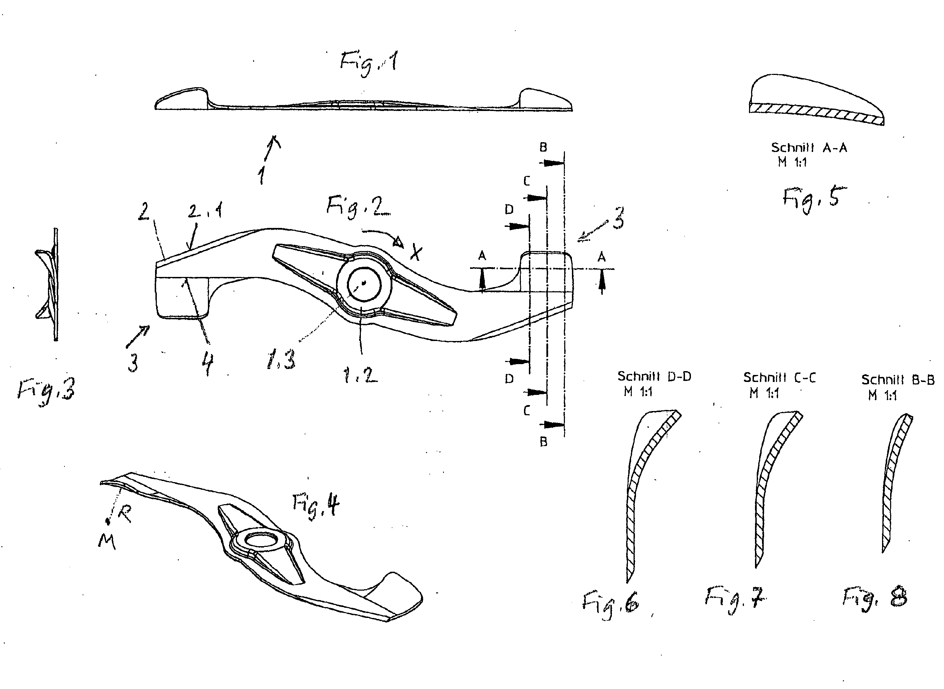

Man erkennt ferner eine Nabe 1.2 zur Aufnahme an einer hier nicht dargestellten Motorwelle. Dem Messerbalken 1 ist ein Messer 2 angeschliffen, das eine Messerschneide 2.1 aufweist. Siehe vor allem Figur 2.

Der in Figur 2 enthaltene Pfeil X deutet die Umlaufrichtung des Messerbalkens 1 an - im vorliegenden Falle in der Ansicht von oben im Uhrzeigersinn.

Das Messer 2 könnte auch als eigenständiges Bauteil ausgeführt und am Messerbalken 1 befestigt sein, beispielsweise durch Schrauben, Kleben oder Schweißen.

Besonders wichtige Bauteile sind die beiden Lüfterflügel 3, die an beiden Enden des Messerbalkens 1 angeordnet sind. Im vorliegenden Falle sind die Flügel 3 einteilig mit dem Messerbalken 1 hergestellt, und zwar durch Aufbiegen. Auch diese Elemente könnten eigenständige Bauteile sein, die durch irgendwelche Fixierungseinrichtungen mit dem Messerbalken 1 fest verbunden sind.

Die Lüfterflügel befinden sich im vorliegenden Falle ganz am äußeren Umfang des Messerbalkens 1. Sie könnten auch radial in Richtung auf die Drehachse 1.3 versetzt sein, beispielsweise auf zwei Drittel des Radius; gemessen von der Drehachse 1.3 aus.

Die Lüfterflügel sind - in Umlaufrichtung des Messerbalkens 1 - dem Messer 2 nachgeschaltet oder hinter dem Messer 2 angeordnet. Sie sind gemäß, der Erfindung in einer bestimmten Weise gestaltet. Sie schieben einen Gras-Luft-Strom vor sich her. Dieser Gras-Luft-Strom hat an sich das Bestreben, aufgrund der Zentrifugalkraft nach außen gegen die hier nicht gezeigte Gehäusewandung zu prallen. Die Lüfterflügel 3 wirken dem entgegen, indem sie dem Gras-Luft-Strom eine Komponente in Umfangsrichtung verleihen. Dabei braucht die Richtung des genannten Gras-Luft-Stromes nicht genau in Umfangsrichtung zu verlaufen, wohl aber mit einer gewissen Tendenz hierzu.

Der Endbereich eines jeden Lüfterflügels 3 ist gekrümmt. Dies ergibt sich am besten aus den Figuren 4 und 5. In Figur 4 erkennt man einen Krümmungsradius R. Dieser kann wenige Millimeter betragen, somit beispielsweise 1, 2, 3 ... 10 mm, aber auch wesentlich mehr, beispielsweise 20, 30, 50 mm sowie alle Werte, die dazwischen liegen.

Die Krümmung braucht zwar nur im Endbereich des einzelnen Lüfterflügels 3 vorhanden zu sein. Sie kann sich jedoch auch über einen wesentlichen Teil des Lüfterflügels erstrecken, d. h. von dessen freier Endkante bis zu einer Linie 4, entlang welcher der betreffende Lüfterflügel an den Hauptkörper des Messerbalkens 1 anschließt und im allgemeinen wird der Lüfterflügel 3 mit dem Hauptteil des Messerflügels 1 einteilig sein, so dass die Linie 4 eine Biegelinie darstellt. Es ist aber auch möglich, die Lüfterflügel 3 als eigenständige Teile vorzufertigen und in irgendeiner Weise mit dem Hauptteil des Messerbalkens 1 zu verbinden, beispielsweise durch Anschweißen.

Im vorliegenden Falle liegt der Krümmungsmittelpunkt M unterhalb des betreffenden Lüfterflügels 3 - siehe Figur 4 mit dem dort ebenfalls dargestellten Radius R. Die Krümmung soll im Rahmen dieses Textes als "konkav" bezeichnet werden.

Es hat sich jedoch gezeigt, dass eine entgegengesetzte Krümmung vorteilhaft sein kann, somit mit dem Krümmungsmittelpunkt M oberhalb des Lüfterflügels 3 liegend - hier nicht dargestellt.

Ein erfindungsgemäßer Messerbalken der beschriebenen Art hat die folgenden Vorteile:
Während des Betriebes des Rasenmähers ist der von ihm erzeugte Geräuschpegel sehr gering. Der Verschleiß des Messers ist ebenfalls gering. Die Schnittqualität ist sehr gut. Die Standzeit des Messers ist hoch.

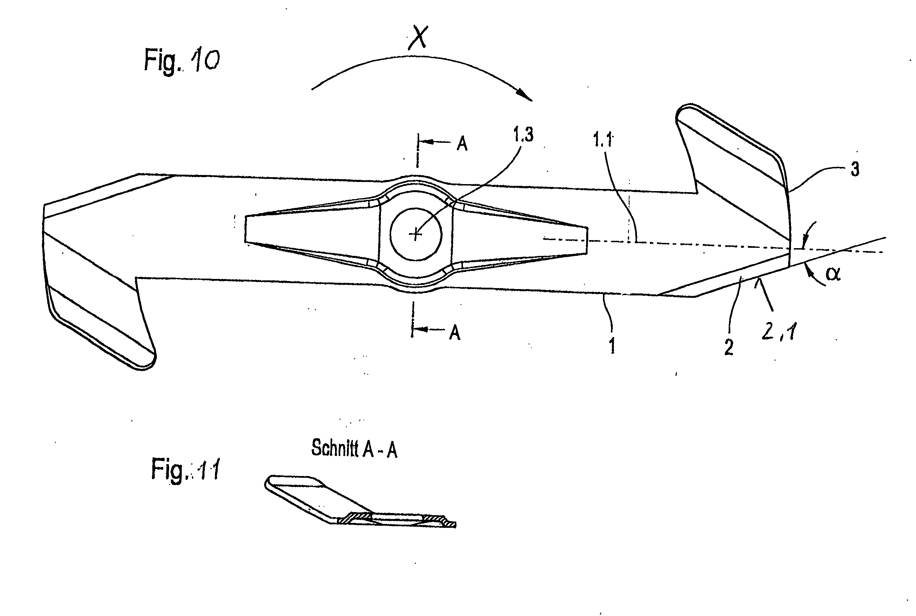

In Figur 10 erkennt man, dass die Schneide 2a mit der Längsachse 1.1 des Messerbalkens einen Winkel α bildet.

Zusätzlich zu den beiden Lüfterflügeln 3 kann der Messerbalken 1 mit Sekundärflügeln 4 ausgestattet sein. Genau wie die Lüfterflügel 3 stehen auch die Sekundärflügel auf dem Messerbalken 1.

Die Sekundärflügel 4 sind in radialer Richtung näher bei der Drehachse 1.3 angeordnet als die Lüfterflügel 3. Sie haben im vorliegenden Falle wenigstens annähernd Kreisbogenform - in Draufsicht gesehen. Sie verlaufen wenigstens annähernd konzentrisch zur Drehachse 1.3, weichen aber doch etwas hiervon ab.. Dies ist der Winkel, den ein Flugkreis eines Flächenelementes des Messerbalkens 1 mit dem Endabschnitt des Sekundärflügels 4 bildet.

Die Sekundärflügel 4 könnten in Draufsicht auch geradlinig sein, genau wie die Lüfterflügel 3. Sie können das gleiche Höhenmaß haben, von der oberen Fläche des Messerbalkens 1 aus gesehen wie die Lüfterflügel 3. Ihre Oberkante kann statt dessen aber auch tiefer oder höher liegen.

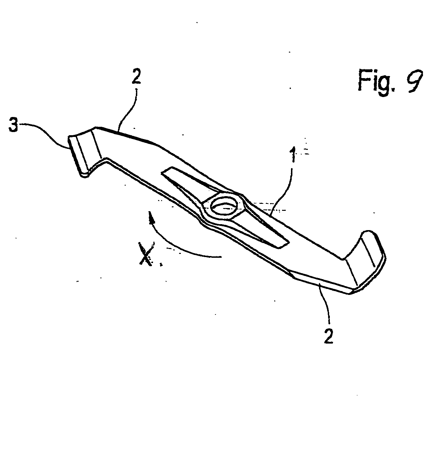

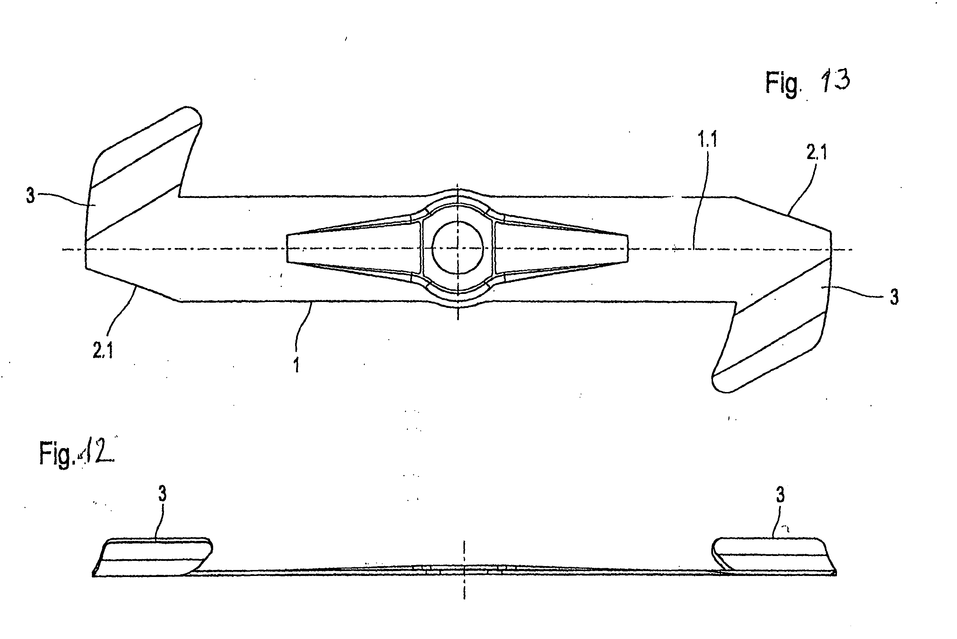

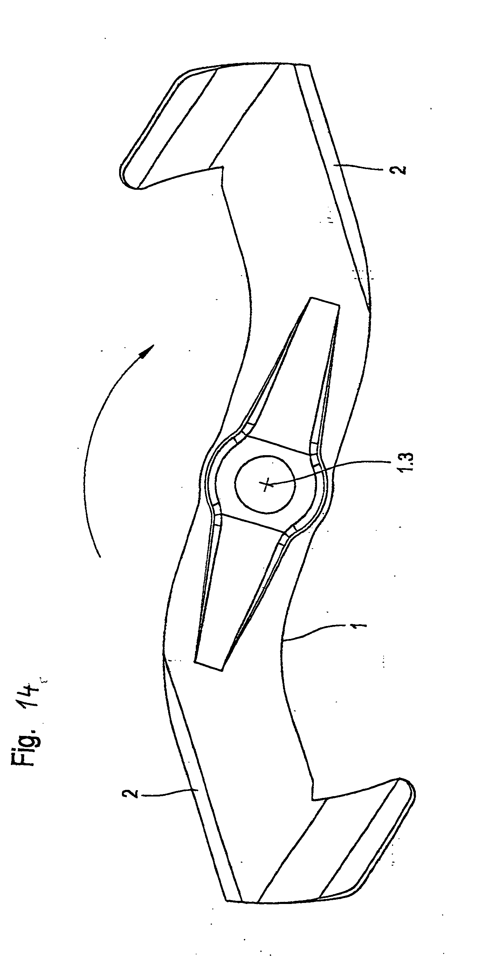

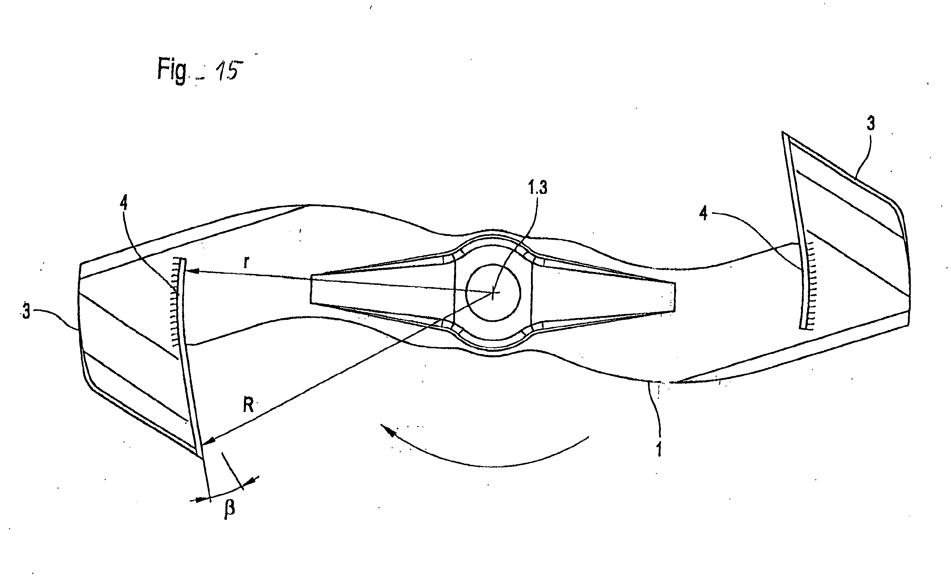

Der Messerbalken muss nicht unbedingt geradlinig verlaufen, so wie in den Figuren 9 bis 13 dargestellt. Er könnte beispielsweise auch einen S-förmigen Verlauf haben - siehe Figuren 14 und 15.

Ein erfindungsgemäßer Messerbalken der beschriebenen Art hat die folgenden Vorteile:
Während des Betriebes des Rasenmähers ist der von ihm erzeugte Geräuschpegel sehr gering. Der Verschleiß des Messers ist ebenfalls gering. Die Schnittqualität ist sehr gut. Die Standzeit des Messers ist hoch.

Der in Figur 14 gezeigte Messerbalken 1 ist gekrümmt. Er hat annähernd einen S-förmigen Verlauf. Es handelt sich somit um zwei Krümmungen, die einander entgegengerichtet sind, und die beidseits der Drehachse 1.3 verlaufen. Das Messer 2 hat hierdurch eine etwas größere Länge, als bei der Ausführungsform gemäß Figur 10. Im Übrigen sind jedoch die Verhältnisse im wesentlichen gleich wie bei Figur 10.

Bei der Ausführungsform gemäß Figur 15 ist der Messerbalken wieder gekrümmt, jedoch sind hierbei jeweils beidseits der Drehachse 1.3 zwei Krümmungen im Gegensinne vorgesehen.

Man beachte die Krümmung des Sekundärflügels.4. Diese ist über den Längenverlauf unterschiedlich. Sekundärflügel 4 ist auf seinem in Umlaufrichtung hinteren Ende in geringerem Maße als auf seinem in Umlaufrichtung vorderen Ende gekrümmt. Man beachte den großen Radius R im hinteren Bereich, und den kleineren Radius r im vorderen Bereich, ferner den Winkel β, den der Sekundärflügel 4 in seinem hinteren Bereich mit einer Tangente an den Flugkreis des Messerbalkens bildet.

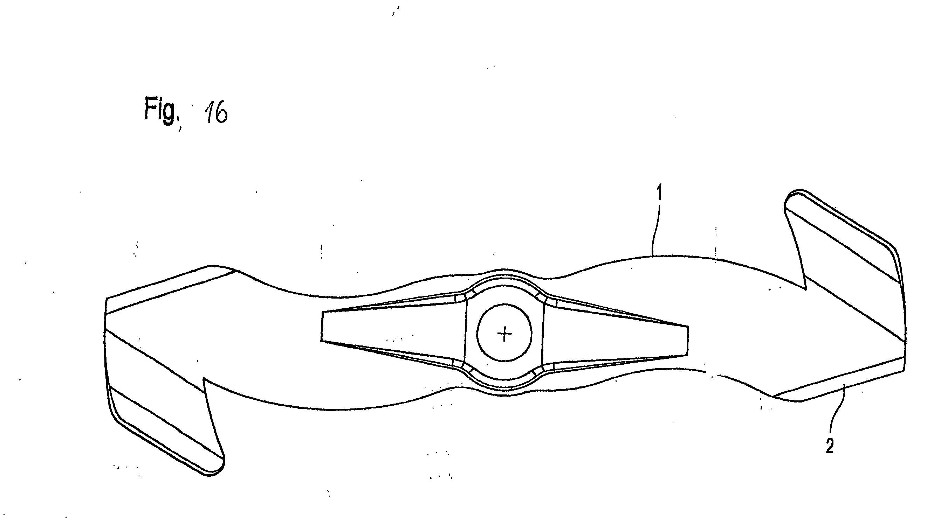

Bei der Ausführungsform gemäß Figur 16 ist der Messerbalken wiederum gekrümmt. Im Gegensatz zu den Ausführungen gemäß der Figuren 14 und 15 ist die Krümmung derart ausgeführt, dass das Messer 2 in Umlaufrichtung nach vorn verlegt ist.

## Patentansprüche

1. Drehbar gelagerter Messerbalken (1) für einen Rasenmäher;
1.1 mit wenigstens einem Messer (2), das eine Schneide (2.1) aufweist;
1.2 die Schneide (2.1) des Messerbalkens (1) ist derart angeordnet, dass sie bei Betrieb des Rasenmähers einen ziehenden Schnitt ausführt;
1.3 auf dem Messerbalken ist wenigstens ein Lüfterflügel (3) angeordnet, der beim Betrieb des Rasenmähers aus der Ebene des Messerbalkens (1) nach oben ragt;
1.4 der einzelne Lüfterflügel (3) ist in einer Seitenansicht auf eine Längsseite des Messerbalkens (1) gesehen wenigstens im Bereich seines freien Endes gekrümmt.

2. Messerbalken (1) nach Anspruch 1, **dadurch gekennzeichnet, dass** die Krümmung eine konkave ist, bei welcher der Krümmungsmittelpunkt M des Lüfterflügels unter dem Lüfterflügel (3) bzw. unter dem Messerbalken (1) liegt.

3. Messerbalken (1) nach Anspruch 1, **dadurch gekennzeichnet, dass** die Krümmung des Lüfterflügels (3) eine konvexe ist, wobei der Krümmungsmittelpunkt M des Lüfterflügels (3) oberhalb des Lüfterflügels bzw. des Messerbalkens (1) liegt.

4. Messerbalken (1) nach einem der Ansprüche 1 bis 3, **dadurch gekennzeichnet, dass** der Krümmungsradius der Krümmung des Lüfterflügels (3) wenigstens 1 mm beträgt.

5. Messerbalken nach einem der Ansprüche 1 bis 2, **gekennzeichnet durch** die folgenden Merkmale:
5.1 der Lüfterflügel (3) ist derart gestaltet, dass die Bewegungsrichtung des vom Messer (2) abgeschnittenen Gutes eine Komponente radial nach außen, axial nach oben sowie in Umfangsrichtung aufweist.

6. Messerbalken (1) nach einem der Ansprüche 1 bis 9, **dadurch gekennzeichnet, dass** die Längsmittelachse des Messerbalkens (1) - in Draufsicht gesehen - einen von einer Geraden abweichenden Verlauf hat.

7. Messerbalken (1) nach Anspruch (10), **dadurch gekennzeichnet, dass** der Verlauf S-förmig ist.

8. Messerbalken (1) nach Anspruch (10), **gekennzeichnet durch** eine solche Krümmung, dass das Messer (2) gegenüber einem gradlinigen Verlauf in Umfangsrichtung nach vorn verlegt ist.
